# EUROPÄISCHE PATENTSCHRIFT

(11) **EP 0 536 368 B1**
(45) Veröffentlichungstag und Bekanntmachung des Hinweises auf die Patenterteilung: **27.09.1995**
(21) Anmeldenummer: 92909105.6
(22) Anmeldetag: 22.04.1992
(51) Int. Cl.: A61G 12/00

(54) **TRANSPORTABLE MEDIZINISCHE EINRICHTUNG INSBESONDERE INFUSIONSVERSORGUNGSEINRICHTUNG**
TRANSPORTABLE MEDICAL DEVICE, IN PARTICULAR AN INTRAVENOUS-DRIP FEED DEVICE
DISPOSITIF MEDICAL TRANSPORTABLE, EN PARTICULIER DISPOSITIF POUR SOINS DE PERFUSION

(30) Priorität: 23.04.1991 DE 4113228
(43) Veröffentlichungstag der Anmeldung: 14.04.1993
(73) Patentinhaber: Kreuzer GmbH + Co. OHG, D-82178 Puchheim (DE)
(72) Erfinder: KREUZER, Friedhelm, D-8000 München 60 (DE); STÖCKL, Armin, D-8115 Ohlstadt (DE)
(74) Vertreter: Prüfer, Lutz H., Dipl.-Phys.
(86) Internationale Anmeldenummer: EP9200889
(87) Internationale Veröffentlichungsnummer: WO9218085

(56) Entgegenhaltungen:
- EP-A- 0 400 407
- WO-A-90/03157
- DE-A- 3 145 310
- DE-B- 2 812 074
- US-A- 3 512 387
- US-A- 4 724 844
- US-A- 4 795 122

## Beschreibung

Die Erfindung betrifft eine transportable medizinische Einrichtung, insbesondere Infusionsversorgungseinrichtung, mit einem Träger und daran befestigbaren Geräten für die Patientenversorgung.

Aus der US-A-4,795,122 ist eine transportable medizinische Einrichtung, insbesondere Infusionsversorgungseinrichtung mit einem Träger und daran befestigbaren Geräten für die Patientenversorgung bekannt. Der Träger weist mit z.B. einem Patientenbett vorgesehenen Kupplungselementen verbindbare erste Kupplungselemente auf. Ferner weist der Träger in einer eine Verriegelungseinrichtung aufweisenden Kupplungseinrichtung, die beispielsweise an einem Deckenstativ vorgesehen ist, ein zweites Kupplungselement auf.

Bekannt ist aus DE-A-31 45 310 ferner ein Geräteaufnahmesystem der Medizintechnik, bei dem das Gerät an einem Geräterahmen mit Führungsleisten befestigt ist. Mittels dieser Führungsleisten und zweier Sperren, die mit einem Riegel zusammenwirken, ist der Geräterahmen beim Transport mit einem Hubwagen und am Einsatzort mit einer Rahmenaufnahme verbindbar.

Dieses System ist relativ platzaufwendig und für schwere und voluminöse Geräte vorgesehen.

Aus der DE-B-28 12 074 ist weiter eine Patientenlagerungsplatte bekannt, die von einem Fahrgestell auf ein Tischgestell umsetzbar ist und bei der zur Verbindung mit dem Fahr- beziehungsweise Tischgestell Kupplungen mit schwenkbaren Klinken vorgesehen sind. Diese Verriegelung ermöglicht eine Schwenkung der Patientenlagerungsplatte um 360° um eine horizontale Achse und sichert deren zuverlässige Halterung unabhängig von etwaigen Bedienungsfehlern.

Diese Vorrichtung ist - ihrem Einsatzzweck entsprechend - groß und aufwendig; letzteres gilt auch für die Kupplungen und Verriegelungen.

Aufgabe der Erfindung ist es, die Konstruktion so auszubilden, daß die Abkupplung und Übergabe von der stationären Einrichtung zu der Patiententransporteinrichtung und umgekehrt auf besonders einfache und sichere Weise verläuft.

Diese Aufgabe wird durch die im Patentanspruch 1 gekennzeichnete transportable medizinische Einrichtung gelöst.

Weiterbildungen der Erfindung sind in den Unteransprüchen gekennzeichnet.

Es folgt die Beschreibung von Ausführungsbeispielen anhand der Figuren. Von den Figuren zeigen:
- Fig. 1: eine schematische Darstellung einer transportablen medizinischen Einrichtung mit Stativ und Patiententransporteinrichtung;
- Fig. 2: einen Schnitt durch die mit den Kopplungselementen zusammenwirkende Kopplungseinrichtung in entkoppeltem Zustand;
- Fig. 3: eine Ansicht der in Fig. 2 gezeigten Vorrichtung von oben mit abgenommener Abdeckung;
- Fig. 4: eine Draufsicht auf die in Fig. 2 gezeigte Vorrichtung von unten mit abgenommener Abdeckung;
- Fig. 5: die in Fig. 2 gezeigte Vorrichtung mit verriegeltem Zapfen einer Patiententransporteinrichtung oder der stationären Einrichtung;
- Fig. 6: die in Fig. 5 gezeigte Darstellung mit beiden in die Kopplungseinrichtung eingeführten Zapfen;
- Fig. 7: die in Fig. 5 dargestellte Vorrichtung, bei der nur der Zapfen der Lafette eingesetzt und verriegelt ist; und
- Fig. 8: eine der in Fig. 1 entsprechende Darstellung einer abgewandelten Ausführungsform.

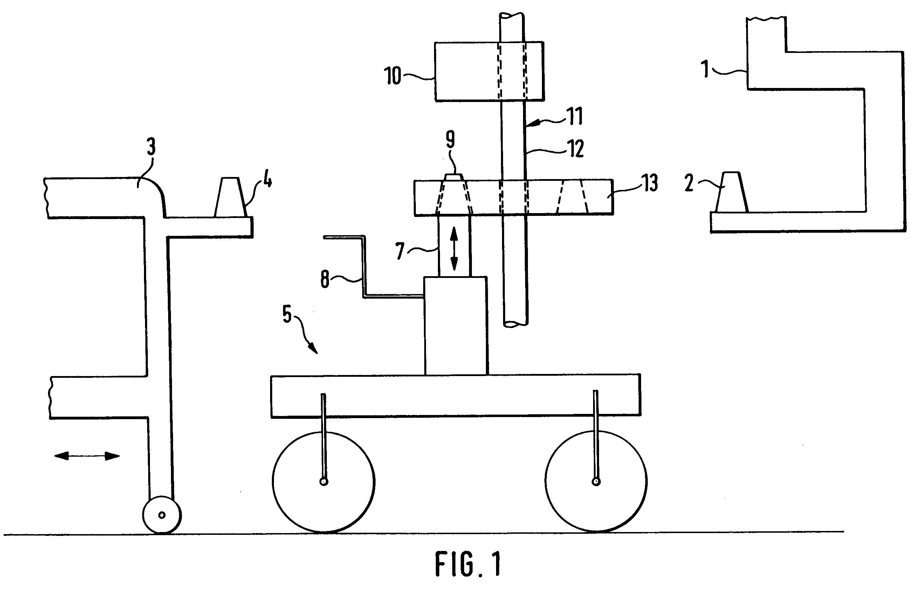

Fig. 1 zeigt einen Teil eines Deckenstativs 1 mit einem sich an diesem befestigten und in vertikaler Richtung nach oben erstreckenden Zapfen 2. An einem Bett 3, welches als Patiententransporteinrichtung dient, ist an einem Rahmenteil ein sich ebenfalls vertikal nach oben erstreckender Zapfen 4 vorgesehen. Es ist eine Lafette 5 vorgesehen, die auf einem Fahrgestell eine Hubeinrichtung 6 aufweist, die einen in der Höhe ausfahrbaren bzw. einfahrbaren Kolben 7 aufweist, der über eine Pneumatikeinrichtung oder über einen entsprechenden mit einer Kurbel 8 zu betätigenden Antrieb bewegbar ist. An seinem oberen freien Ende weist der Kolben 7 einen dritten Zapfen 9 auf, der sich ebenfalls in vertikaler Richtung nach oben erstreckt. Die Ausrichtung der drei Zapfen 2, 4 und 9 ist parallel zueinander.

Ein die medizinischen Geräte 10 der Infusionsversorgungseinrichtung tragender Träger 11 weist eine Trägerstange 12 zum Montieren der Geräte 10 an derselben und ein eine Kupplungseinrichtung 13 bildendes plattenförmiges Element auf. Die Kupplungseinrichtung 13 umfaßt einen im wesentlichen plattenförmigen Grundkörper 14. Durch den Mittelpunkt der Platte erstreckt sich eine vertikale Bohrung 15 zur Aufnahme der Trägerstange 12. Zum Verriegeln der Kupplungseinrichtung 13 mit der Trägerstange 12 ist ein als asymmetrisch gelagerter Drehbolzen ausgebildetes Verriegelungselement 16 vorgesehen. Durch Verdrehen dieses Elementes kann die Verriegelung zwischen diesen beiden Teilen gelöst und die Kupplungseinrichtung höhenmäßig auf der Trägerstange 12 verschoben werden.

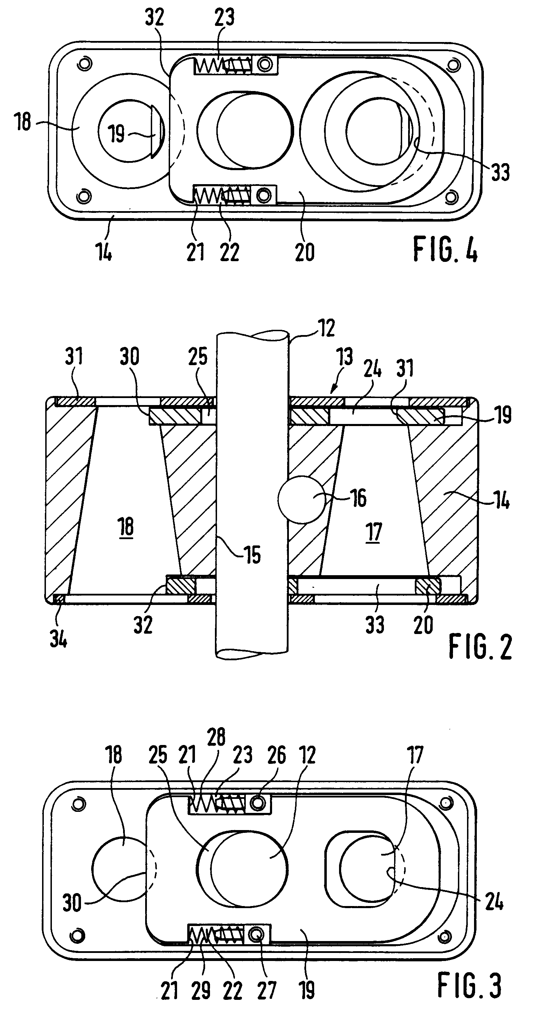

Die Kupplungseinrichtung weist symmetrisch zu der die Trägerstange 12 aufnehmenden Bohrung 15 zwei sich parallel zur Achse der Bohrung erstreckende Ausnehmungen 17, 18 auf. Die beiden Ausnehmungen haben, wie am besten aus Fig. 2 ersichtlich ist, jeweils sich nach oben verjüngende konische Wandungen. Wie am besten aus den Fig. 2 bis 4 ersichtlich ist, ist nahe des oberen Randes der Ausnehmungen ein erster Schieber 19 und nahe des unteren Randes der Ausnehmungen ein zweiter Schieber 20 vorgesehen. Die beiden Schieber sind in einer Richtung senkrecht zur Achsenrichtung der Ausnehmungen 17 und 18 und damit zur Achse der Trägerstange 12 verschiebbar. Der erste Schieber 19 weist eine erste Ausnehmung 24 auf, deren Abmessung so gewählt ist, daß sie der Größe der Ausnehmung 17 entspricht, wenn sich der erste Schieber in einer entsprechenden zurückgeschobenen Stellung befindet. Ferner ist eine zweite Ausnehmung 25 vorgesehen, die, wie am besten aus Fig. 3 ersichtlich ist, als Langloch ausgebildet ist. Der Durchmesser ist so gewählt, daß in dem Langloch die Trägerstange 12 geführt wird. In den Ausnehmungen 22, 23 sind mit dem Grundkörper 14 fest verbundene Anschläge 26, 27 angeordnet. Zwischen diesen Anschlägen und den diesen gegenüberliegenden Anschlagsflächen 21 der Ausnehmungen 22, 23 sind Druckfedern 28, 29 unter Vorspannung angeordnet. Die Abmessung des ersten Schiebers und der ersten Ausnehmung 24 sind so bemessen, daß der Schieber in der in den Fig. 2 und 3 gezeigten, durch die Federvorspannung bedingten Stellung mit seinem freien vorderen Rand 30 bzw. einem Rand 31 der Ausnehmung 24 jeweils in die Ausnehmungen 17, 18 hineinreicht. Andererseits kann der Schieber entgegen der Federkraft soweit verschoben werden, daß er die Öffnungen 17, 18 völlig freigibt. Der erste Schieber 19 ist durch einen mit dem Grundkörper 14 verschraubten Deckel gehalten und abgedeckt.

Der zweite Schieber weist eine dem ersten Schieber entsprechende Ausbildung mit einer entsprechenden Federvorspannung auf. Er unterscheidet sich lediglich bezüglich der Abmessungen insoweit, als sein freier vorderer Rand 32 und seine erste Ausnehmung 33 so bemessen sind, daß sie in der durch die Federvorspannung bedingten freien Stellung in der in Fig. 2 gezeigten Weise in die Ausnehmungen 17, 18 hineinragen und in ihrer gegen die Federvorspannung zurückgeschobenen Stellung die beiden Ausnehmungen freigeben. Auch der zweite Schieber ist durch einen mit dem Grundkörper fest verschraubten Deckel 34 verschiebbar abgedeckt.

Der mit dem Kolben 7 verbundene Zapfen 9 weist in einem kleinen Abstand von seinem oberen Rand eine durch eine Hinterschneidung gebildete ringförmige Ausnehmung 35 auf. Die Lage der ringförmigen Ausnehmung ist so gewählt, daß sie bei Einführung in die Ausnehmung 18 der Kopplungseinrichtung 13 genau in der Ebene des ersten Schiebers 19 liegt. Die Abmessungen der Ausnehmung sind so gewählt, daß der erste Schieber 19 gerade in die Ausnehmung hineinpaßt. Die übrigen Zapfen, also der Zapfen 2 am Deckenstativ 1 und der Zapfen 4 am Bett 3 sind so ausgebildet, daß sie in einem kleinen Abstand von ihrem unteren Rand eine entsprechende ringförmige Ausnehmung 36 aufweisen. Diese ist bezüglich ihrer Lage in axialer Richtung so gewählt, daß sie in einer Ebene mit dem zweiten Schieber 20 liegt. Die Abmessungen bezüglich Tiefe und Höhe der ringförmigen Ausnehmung sind wiederum so gewählt, daß der zweite Schieber gerade in die Ausnehmung 36 hineinpaßt.

In dem gezeigten Ausführungsbeispiel ist der Kegelwinkel der Zapfen und der zugehörigen Ausnehmungen mit etwa 22° gewählt. Dadurch wird erreicht, daß einerseits ein Verschwenken der Kupplungseinrichtung 13 um den jeweiligen Zapfen möglich ist, daß aber durch den Neigungswinkel und die ausgeübte Schwerkraft doch eine gewisse Bremswirkung gegen unbeabsichtigtes Verschwenken erreicht wird. Anstelle der kegelförmigen Zapfen können auch zylindrische Zapfen mit entsprechend zylindrischen Ausnehmungen gewählt werden.

Im weiteren wird die Funktionsweise der beschriebenen Vorrichtung am Beispiel des Abnehmens der die Trägerstange 12 tragenden Kupplungseinrichtung 13 von dem Zapfen 2 auf den Zapfen 9 der Lafette erläutert.

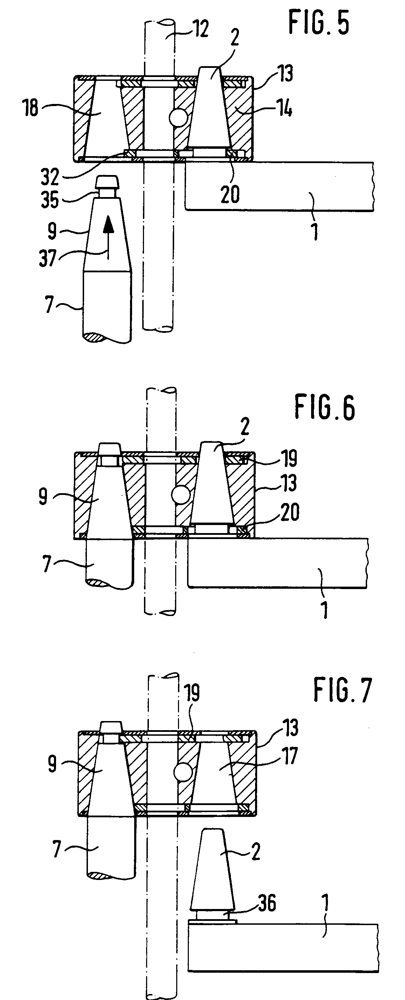

Zunächst ist die Trägerstange 12 mit der Kupplungseinrichtung 13 in der in Fig. 5 gezeigten Weise auf dem Zapfen 2 des Deckenstativs 1 gelagert. Die Führung erfolgt über den Zapfen. Eine Verriegelung ist dadurch erreicht, daß der zweite Schieber bedingt durch die Federvorspannung sich in der in Fig. 2 gezeigten Stellung befindet und dadurch in die ringförmige Ausnehmung 36 eingreift.

Zum Übernehmen der Trägerstange mit der zugehörigen Kupplungseinrichtung wird der Zapfen 9 über die Kolbenzylindereinrichtung so nach oben in Richtung des Pfeiles 37 gefahren, daß der Zapfen 9 in die Ausnehmung 18 eingeführt wird. Beim Einführen schiebt der Zapfen 9 mit seiner Mantelfläche den in die Ausnehmung 18 hineinragenden vorderen Rand 32 entgegen der Federkraft aus der Ausnehmung heraus. Dadurch wird erreicht, daß auch die erste Ausnehmung 33 so verschoben wird, daß sie mit der Ausnehmung 17 kongruent ist, so daß gleichzeitig der Zapfen 2 entriegelt wird.

Im nächsten Schritt wird der Kolben 7 weiter so weit nach oben ausgefahren, daß die Kupplungseinrichtung 13 mit der Trägerstange 12 und den daran befestigten Geräten 10 von dem Zapfen 2 abgehoben wird. Sobald der Zapfen 2 aus der Ausnehmung 17 soweit zurückgezogen wird, daß der Mantel des Zapfens 2 nicht mehr gegen den Rand des federvorgespannten ersten Schiebers 19 drückt, wird dieser durch die Federvorspannung mit seinem vorderen Rand 30 in die ringförmige Ausnehmung 35 hineingeschoben und verriegelt damit die Kupplungseinrichtung 13 mit dem Zapfen 9. Das Übergeben der Kupplungseinrichtung 13 mit der Trägerstange 12 an den Zapfen 4 des Bettes bzw. der Patiententransporteinrichtung erfolgt in umgekehrter Weise durch Indeckungbringen mit dem Zapfen 4, Absenken auf diesen und abschließendes Absenken des Zapfens 9 und abschließende Verriegelung zwischen Kupplungseinrichtung 13 und Zapfen 4.

Bei der oben beschriebenen Ausführungsform weist der Zapfen der Lafette an seinem oberen Rand eine ringförmige Ausnehmung auf, während die übrigen Zapfen an ihrem unteren Rand eine ringförmige Ausnehmung aufweisen, diese Anordnung kann auch umgekehrt gewählt werden. Entscheidend ist nur, daß der Zapfen der Lafette einerseits und die übrigen Zapfen andererseits sich diesbezüglich unterscheiden.

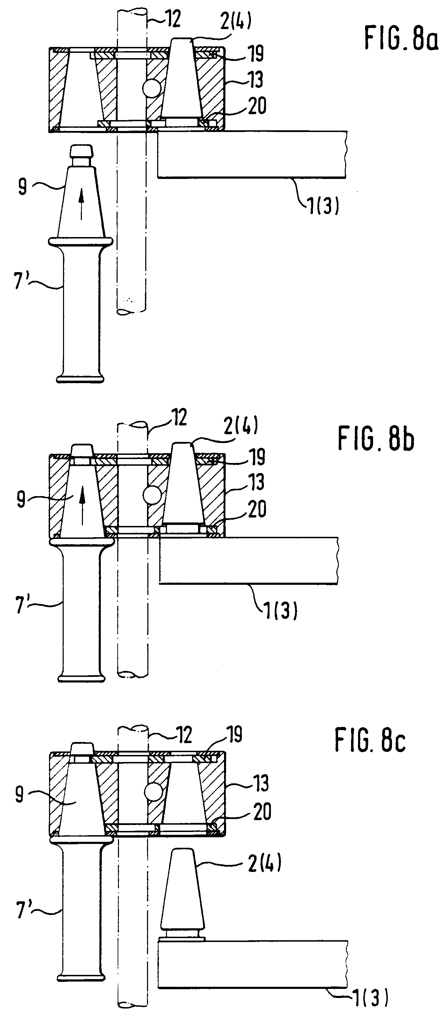

Bei der in Fig. 8 gezeigten Ausführungsform ist die als Lafette zum Fahren ausgebildete Einrichtung zum Umsetzen ersetzt durch eine griffartige Einrichtung 7'. Diese ist in ihrem unteren Teil als stangenartiger Griff ausgebildet. Das obere freie Ende stimmt mit der Ausbildung des oberen freien Endes des Kolbens 7 der Lafette überein. Alle übrigen Merkmale sind mit der in Fig. 1 gezeigten Ausführungsform übereinstimmend.
In der Fig. 8 entsprechen die Darstellungen a), b) und c) den in den Fig. 5 bis 7 gezeigten Betriebszuständen.

## Patentansprüche

1. Transportable medizinische Einrichtung, insbesondere Infusionsversorgungseinrichtung, mit einem Träger (12) und daran befestigbaren Geräten (10) für die Patientenversorgung, wobei der Träger (12) eine Kupplungseinrichtung (13) und die Kupplungseinrichtung (13) eine Verriegelungseinrichtung (19, 20) aufweist,
einer Einrichtung (5) zum Umsetzen des Trägers mit einem mit der Kupplungseinrichtung (13) zusammenwirkenden ersten Kupplungselement (9),
einem an einer stationären Einrichtung, insbesondere einem stationären Stativ (1), befestigbaren zweiten, mit der Kupplungseinrichtung (13) zusammenwirkenden Kupplungselement (2) und
einem an einer Patiententransporteinrichtung (3) befestigbaren dritten, mit der Kupplungseinrichtung (13) zusammenwirkenden Kupplungselement (4),
wobei die Kupplungseinrichtung (13) so ausgebildet ist, daß eines oder zwei der Kupplungselemente (2, 4, 9) mit ihr im Eingriff stehen können, und die Verriegelungseinrichtung so ausgebildet ist, daß bei Ineinandergreifen von einem Kupplungselement und der Kupplungseinrichtung diese mit dem Kupplungselement verriegelt ist und daß bei Ineinandergreifen von zwei Kupplungselementen mit der Kupplungseinrichtung zum Lösen der jeweiligen lösbaren Verbindung die Kupplungseinrichtung von den Kupplungselementen entriegelt ist.

2. Transportable medizinische Einrichtung nach Anspruch 1, dadurch gekennzeichnet, daß die Kupplungselemente als hervorstehende Zapfen (2, 4, 9) ausgebildet sind und die Kupplungseinrichtung (13) der Form der Zapfen angepaßte Ausnehmungen aufweist.

3. Transportable medizinische Einrichtung nach Anspruch 2, dadurch gekennzeichnet, daß die Zapfen (2, 4, 9) und die Ausnehmungen (17, 18) jeweils vertikal ausgerichtet sind.

4. Transportable medizinische Einrichtung nach Anspruch 3, dadurch gekennzeichnet, daß die Zapfen (2, 4, 9) nach oben hervorstehen.

5. Transportable medizinische Einrichtung nach Anspruch 4, dadurch gekennzeichnet, daß die Zapfen (2, 4, 9) einen konisch verlaufenden Mantelabschnitt aufweisen.

6. Transportable medizinische Einrichtung nach einem der Ansprüche 2 bis 5,
dadurch gekennzeichnet, daß die mit der stationären Einrichtung (1) und der Patiententransporteinrichtung (3) verbundenen Zapfen (2, 4) an einer ersten Stelle und der Zapfen (9) der Kupplungseinrichtung (13) an einer zweiten Stelle jeweils eine Ausnehmung (35, 36) zum Eingreifen der Verriegelungseinrichtung (19, 20) aufweisen.

7. Transportable medizinische Einrichtung nach Anspruch 6,
dadurch gekennzeichnet, daß die Verriegelungseinrichtung einen ersten Schieber (19) und einen zweiten Schieber (20) aufweist, die jeweils so federvorgespannt sind, daß die Schieber (19, 20) an dem der ersten beziehungsweise zweiten Stelle der Zapfen (2, 4) beziehungsweise des Zapfens (9) entsprechenden Ort in deren Ausnehmung (35, 36) hervorstehen und gegen die Federvorspannung aus der Ausnehmung herausschiebbar sind.

8. Transportable medizinische Einrichtung nach Anspruch 6 oder 7,
dadurch gekennzeichnet, daß die Ausnehmungen als Hinterschneidungen (35, 36) ausgebildet sind und die erste und die zweite Stelle in axialer Richtung der Zapfen gesehen einen Abstand voneinander aufweisen.

9. Transportable medizinische Einrichtung nach einem der Ansprüche 1 bis 8,
dadurch gekennzeichnet, daß die Einrichtung zum Umsetzen des Trägers als Lafette (5) zum Fahren des Trägers ausgebildet ist.

## Claims

1. Transportable medical device, in particular an intravenous-drip feed device, with a support (12) and with appliances (10) which can be secured thereon for treating the patient, the support (12) having a coupling device (13) and the coupling device (13) having:- a locking device (19, 20); a device (5) for moving the support, with a first coupling element (9) cooperating with the coupling device (13), a second coupling element (2) which can be secured on a stationary device, in particular a stationary fitting (1), and which cooperates with the coupling device (13), and a third coupling element (4) which can be secured on a patient-transporting device (3) and which cooperates with the coupling device (13); the coupling device (13) being designed such that one or two of the coupling elements (2, 4, 9) can be engaged with it; and the locking device being designed such that, upon interlocking of a coupling element and the coupling device, the latter is locked to the coupling element and such that, upon interlocking of two coupling elements with the coupling device, the coupling device is unlocked from the coupling elements in order to release the respective releasable connection.

2. Transportable medical device according to Claim 1, characterized in that the coupling elements are designed as projecting tenons (2, 4, 9), and the coupling device (13) has recesses adapted to the shape of the tenons.

3. Transportable medical device according to Claim 2, characterized in that the tenons (2, 4, 9) and the recesses (17, 18) are in each case vertically oriented.

4. Transportable medical device according to Claim 3, characterized in that the tenons (2, 4, 9) project upwards.

5. Transportable medical device according to Claim 4, characterized in that the tenons (2, 4, 9) have a conically extending circumference section.

6. Transportable medical device according to one of Claims 2 to 5, characterized in that the tenons (2, 4) connected to the stationary device (1) and the patient-transporting device (3) have at a first position, and the tenon (9) of the coupling device (13) has at a second position, in each case a recess (35, 36) for the engagement of the locking device (19, 20).

7. Transportable medical device according to Claim 6, characterized in that the locking device has a first slide (19) and a second slide (20) which are in each case prestressed by springs in such a way that the slides (19, 20) protrude in the recess (35, 36) at the location corresponding to the first position of the tenons (2, 4) and the second position of the tenon (9), and can be pushed out of the recess counter to the spring prestressing.

8. Transportable medical device according to Claim 6 or 7, characterized in that the recesses are designed as undercuts (35, 36), and the first position and the second position are spaced apart from one another as viewed in the axial direction of the tenons.

9. Transportable medical device according to one of Claims 1 to 8, characterized in that the device for moving the support is designed as a carriage (5) for conveying the support.

## Revendications

1. Dispositif médical transportable, en particulier dispositif de soins par perfusion, comprenant un support (12) et des instruments (10) pour les soins du patient fixés dessus, le support (12) présentant un dispositif de couplage (13) et le dispositif de couplage (13) un dispositif de verrouillage (19, 20),
un dispositif (5) pour le transfert du support avec un premier élément de couplage (9) coopérant avec le dispositif de couplage (13),
un deuxième élément de couplage (2) pouvant être fixé sur un dispositif stationnaire, en particulier un support (1) stationnaire et coopérant avec le dispositif de couplage (13), et
un troisième élément de couplage (4) pouvant être fixé à un dispositif de transport du patient (3) et coopérant avec le dispositif de couplage (13),
le dispositif de couplage (13) étant conçu de telle sorte qu'un ou deux des éléments de couplage (2, 4, 9) puissent se mettre en prise avec lui, et le dispositif de verrouillage étant conçu de telle sorte que lors de la prise d'un élément de couplage avec le dispositif de couplage, celui-ci soit verrouillé, et lors du relâchement de la prise de deux éléments de couplage avec le dispositif de couplage pour le desserrage de la liaison amovible correspondante, le dispositif de couplage soit déverrouillé par les éléments de couplage.

2. Dispositif médical transportable selon la revendication 1, caractérisé en ce que les éléments de couplage sont conçus comme des chevilles (2, 4, 9) en saillie et le dispositif de couplage (13) présente des évidements adaptés à la forme des chevilles.

3. Dispositif médical transportable selon la revendication 2, caractérisé en ce que les chevilles (2, 4, 9) et les évidements (17, 18) sont orientés verticalement.

4. Dispositif médical transportable selon la revendication 3, caractérisé en ce que les chevilles (2, 4, 9) font saillie vers le haut.

5. Dispositif médical transportable selon la revendication 4, caractérisé en ce que les chevilles (2, 4, 9) présentent une section d'enveloppe de forme conique.

6. Dispositif médical transportable selon l'une ou l'ensemble des revendications 2 à 5, caractérisé en ce que les chevilles (2, 4) reliées au dispositif stationnaire (1) et au dispositif de transport du patient (3) présentent en un premier point, et la cheville (9) du dispositif de couplage (13) en un second point, un évidement (35, 36) pour la prise avec le dispositif de verrouillage (19, 20).

7. Dispositif médical transportable selon la revendication 6, caractérisé en ce que le dispositif de verrouillage présente un premier tiroir (19) et un deuxième tiroir (20), chacun précontraint par ressort de telle sorte que les tiroirs (19, 20) fassent saillie au premier point des chevilles (2, 4) ou au deuxième point de la cheville (9) dans l'évidement (35, 36) de celles-ci et puissent être repoussés hors de l'évidement contre la précontrainte du ressort.

8. Dispositif médical transportable selon la revendication 6 ou 7, caractérisé en ce que les évidements sont conçus comme des contre-découpes (35, 36) et le premier point et le deuxième, vus dans le sens axial des chevilles, sont écartés l'un par rapport à l'autre.

9. Dispositif médical transportable selon l'une ou l'ensemble des revendications 1 à 8, caractérisé en ce que le dispositif pour le transport du support est conçu comme un châssis (5) pour le transport du support.
